# EUROPEAN PATENT SPECIFICATION

(11) **EP 3 433 000 B1**
(45) Date of publication and mention of the grant of the patent: **22.07.2020**
(21) Application number: 17719300.0
(22) Date of filing: 22.03.2017
(51) Int. Cl.: B01D 25/127, B01D 25/164, B01D 33/048

(54) **HORIZONTAL PRESSURE FILTER AND METHODS RELATED THERETO**
HORIZONTALER DRUCKFILTER UND DAZUGEHÖRIGE VERFAHREN
FILTRE SOUS PRESSION HORIZONTAL ET PROCÉDÉS ASSOCIÉS

(30) Priority: 23.03.2016 FI 20165241
(43) Date of publication of application: 30.01.2019
(73) Proprietor: Outotec (Finland) Oy, 02230 Espoo (FI)
(72) Inventor: PARTTI, Ari, 53100 Lappeenranta (FI)
(74) Representative: Boco IP Oy Ab
(86) International application number: PCT/FI2017/050202
(87) International publication number: WO 2017/162924

(56) References cited:
- US-A- 319 673
- US-A- 328 414
- US-A- 578 229
- US-A- 3 655 056

## Description

### FIELD OF THE DISCLOSURE

The present disclosure relates horizontal pressure filters, in which multiple plates, movable away and towards from each other in vertical direction, are placed one above another for forming a horizontal filter chamber. Typically multiple plates form a plate pack which, in turn, form one or more filter chambers. Particularly collector elements and plate elements for such pressure filters are concerned. The disclosure also relates to methods concerning such pressure filters are concerned

### BACKGROUND OF THE DISCLOSURE

For example, document US 3,655,056 concerns a horizontal pressure filter having lateral tubular members partially nested within each other when the filter is in a closed position. In addition, documents US 319,673; US 328,414 and US 578,229 concern box arrangements for oil presses.

### BRIEF DESCRIPTION OF THE DISCLOSURE

A horizontal pressure filter, as defined in independent Claim 1, is provided. Features of the preferred embodiments become apparent from the dependent Claims 2-11.

A method for providing a continuous filtrate conduit between adjacent plate elements of a horizontal pressure filter, as defined in independent Claim 12, is provided. Features of the preferred embodiments become apparent from the dependent Claims 13-17.

A method for operating a horizontal pressure filter, as defined in Claim 18, is provided.

### BRIEF DESCRIPTION OF THE DRAWINGS

In the following the disclosure will be described in greater detail by means of preferred embodiments with reference to the accompanying drawings, in which
Fig. 1 is an exemplary schematic illustration of a horizontal pressure filter
Fig. 2 illustrates a cross-sectional view of a collector element according to an aspect of the description
Fig. 3 illustrates a cross-sectional view of multiple collector elements according to an aspect of the description forming a contiguous duct
Fig. 4 illustrates a cross-sectional view of multiple collector elements according to an aspect of the description forming an effectively continuous duct
Fig. 5 illustrates a cross-sectional view of multiple plate elements according to an aspect of the description having collector elements forming a contiguous duct
Fig. 6 illustrates a cross-sectional view of multiple plate elements according to an aspect of the description having collector elements forming an effectively continuous contiguous duct
Figs. 7A - 7C illustrate various views of multiple alternative collector elements according to an aspect of the description
Figs. 8A - 8C illustrate various views of multiple alternative collector elements according to an aspect of the description
Figs. 9A - 9C illustrate various views of multiple alternative collector elements according to an aspect of the description.
Figs 10A and 10B illustrate an exemplary schematic illustration of a horizontal pressure filter equipped with two-sided plate elements in a closed state and open state, respectively

### DETAILED DESCRIPTION OF THE DISCLOSURE

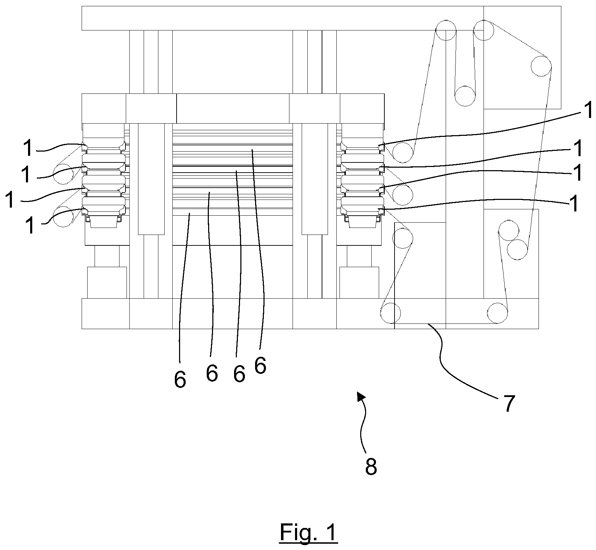

Fig 1 illustrates a schematic view of an exemplary horizontal pressure filter 8. Multiple plate elements 6 are disposed one above another and are movable towards each other into a closed state, and away from each other into an open state. The pressure filter 8 of Fig. 1 is illustrated in the closed state. A filter medium 7 is led between each plate element 6 as a web in a zig-zag manner. Collector elements 1 can be seen on both sides of the plate elements 7. During the filtration process, filtrate separated from a slurry by the filter medium 7 is led from each plate element 6 to its respective collector elements 1 which form a vertical conduit between adjacent plate elements 6, as described in greater detail hereafter
In the closed state of the horizontal pressure filter 8, two adjacent plate elements 6 are pressed against each other, so as to form a closed filtration chamber between each other. Suitably, a subsequent plate element 6, i.e. lower plate element, may be provided with a filter screen 6e for supporting a filter medium 7 on top of it, and enabling filtrate to pass through into a filtrate vat 6a below. A preceding plate element 6, i.e. upper plate element, has a chamber 6d into which the slurry is fed. The chamber 6d is open at its bottom, such that the upper plate element 6 can be pressed against the filter medium 7 supported on the lower plate element. In operation, a filter medium 7 is positioned between the plate elements 6, and subsequently the plate elements are pressed against each other for forming a closed filter chamber 6d. Slurry is fed into the chamber, whereby a solids cake is formed on top of the filter media, while filtrate passes through the filter media 7 and the filter screen 6e into the filtrate vat 6a on the lower plate element 6. After a certain time period, the solids cake formed on the filter medium 7 may be further pressed against the filter medium for squeezing remaining filtrate out of the solids cake. Alternatively, this additional squeezing may initiated by any other parameter, for example after reaching a certain pressure level in the filtration chamber 6d.

As an optional step, a pressurized air flow for drying can be introduced into the filter chamber. The air flows through the solids cake and the filter medium, and further, via the same route as the filtrate.

The filter plate elements 6 are then retracted away from each other in to an open state for removing the solids cake from between. The removal of the solids cake may be done, for example, by forwarding the filter medium 7 provided as a web. However, some residual filtrate will continue to flow out, e.g. of the vats underneath the filter media and filter cake.

Accordingly, in the context of this disclosure, the term horizontal pressure filter is used to describe a pressure filter having multiple plate elements for forming at least one horizontal filter chamber therebetween. Furthermore, the plate elements are arranged to move in vertical direction towards each other and away from each between an open state and a closed state, thus defining a press direction. Such horizontal pressure filters are also known in the industry as tower presses.

Particularly, the horizontal pressure filter according to the disclosure is not to be confused with vertical pressure filters, in which vertical filter chambers are formed in-between vertically disposed plates elements, arranged to move towards and away from each other in a horizontal direction.

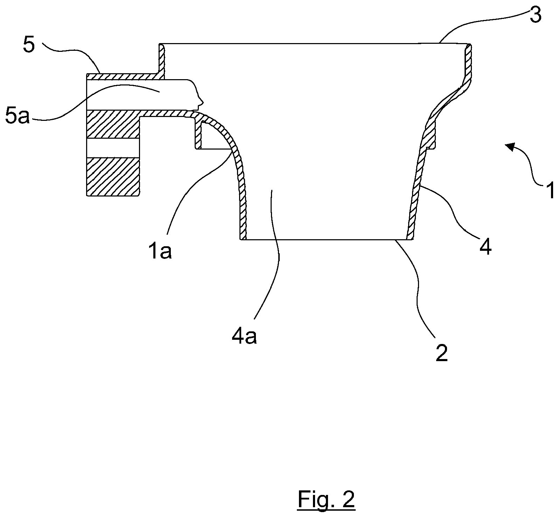

Fig. 2 illustrates a cross-sectional view of a collector element 1 according to an aspect of the disclosure. The collector element 1 comprises a hollow body 1a extending between a first opening portion 2 and a second opening portion 3. An intermediate portion 4 forms a conduit 4a within the hollow body 1a between the first opening portion 2 and the second opening portion 3 in a press direction. Preferably, the intermediate portion 4 forms a conduit 4a in a press direction between the first opening portion 2 and the second opening portion 3. That is, when in use, the passage 4a extends in the direction of movement of the respective plate element 6 in a horizontal filter press 8.

A coupling portion 5 extends outwardly from the hollow body 1a, preferably in a direction transverse to the press direction. The coupling portion 5 has a passage 5a for providing fluid communication between an outlet of a plate element and the inside of the hollow body 1a. In other words, the passage 5a, extends between the inside of the hollow body 1a and a distal end of the coupling portion 5.

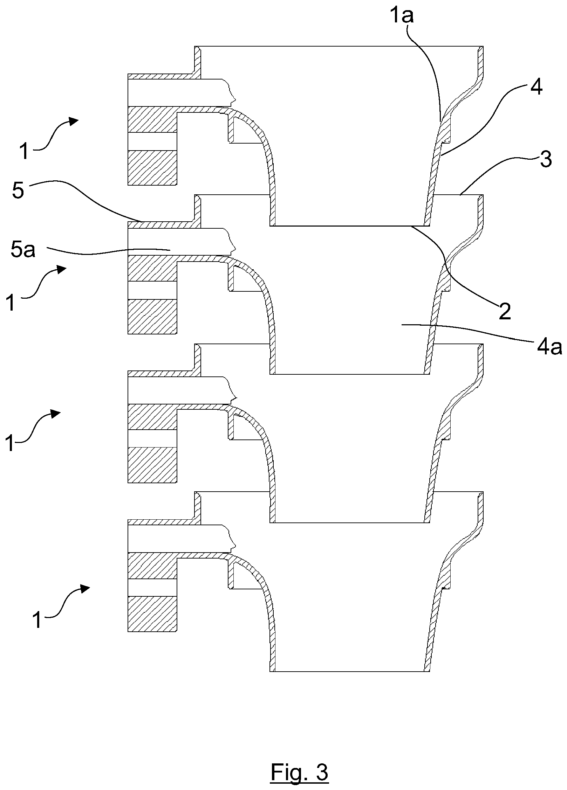

As can clearly be seen from Fig. 2, the inner dimension of the second opening portion 3 is larger than the outside dimension of the first opening portion 2. Particularly, the dimensioning is arranged such that the first opening portion 2 of a preceding collector element 1 can be at least partly nested within the second opening portion 3 of a subsequent collector element 1 as can be seen in Fig. 3.

Fig.3 illustrates multiple collector elements 1 of Fig. 2 as arranged to provide a contiguous filtrate duct in the press direction. That is, the first opening portions 2 of preceding collector elements 1 extend within the second opening portions 3 of subsequent collector elements.

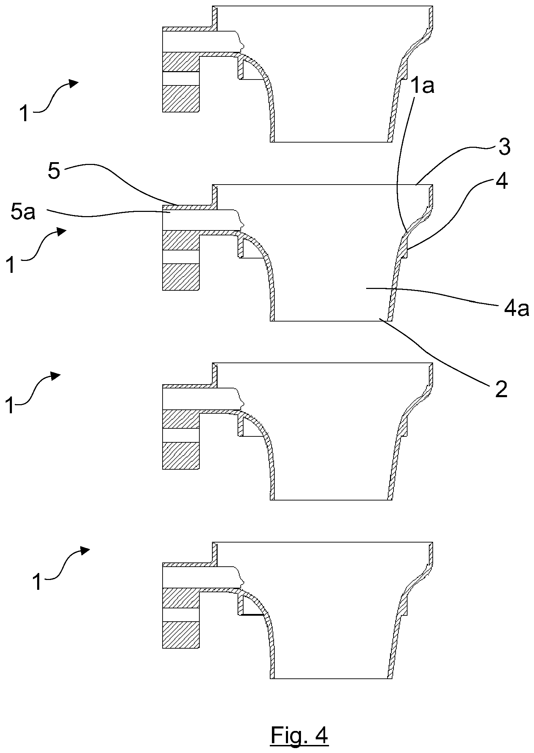

Fig.4, in turn illustrates multiple collector elements 1 of Fig. 2 as arranged to provide an effectively continuous filtrate duct in the press direction. That is, the first opening portions 2 of preceding collector elements 1 are positioned directly above the second opening portions 3 of subsequent collector elements. Filtrate flowing from a preceding collector element 1 to a subsequent collector element 1 will adopt to the inner dimension of the first opening portion 2 of the preceding collector element. Consequently, as the inner dimension of the second opening portion 3 of the subsequent collector element 1 is larger than that of the first opening portion 2 of the preceding collector element 1, all of the filtrate flowing from the first opening portion 2 of the preceding collector element 1 will be received at the second opening portion 3 of the subsequent collector element 1. Hence, filtrate contamination to the surroundings will be avoided.

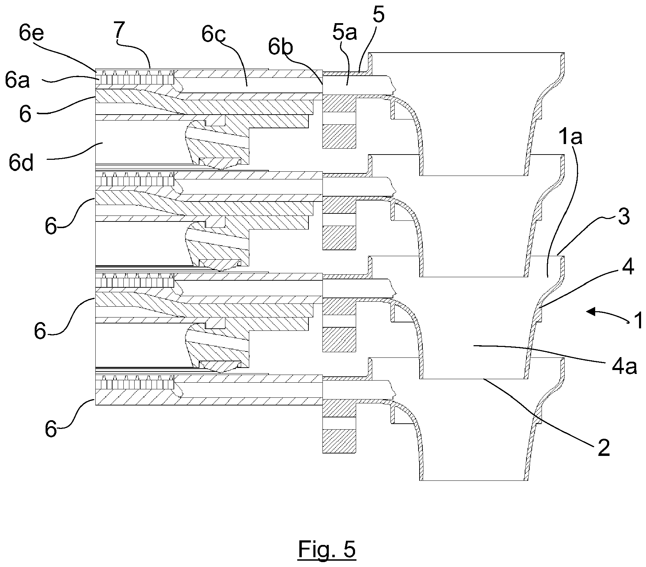

Fig. 5 illustrates portional cross-section views of multiple plate elements 6 one above another, each plate element 6 being equipped with a collector element 1 of Fig. 2. Each plate element 6 has a filtrate vat 6a for receiving filtrate through a filter medium 7 above the plate element 6. As is the case in Fig. 5, the filtrate medium 7 may supported on the plate element 6 by a filtrate screen 6e permitting filtrate to flow through it to the filtrate vat 6a. The plate elements 6 have a drainage outlet 6b with a passage 6c extending from the filtrate vat 6a to the drainage outlet 6b, thus providing fluid communication therebetween. Furthermore, the passages 5a of the collector elements 1 are coupled to the drainage outlets 6b. Consequently, filtrate received by the filtrate vats 6a will flow via the drainage outlet 6b and the passage 5a to the insides of the hollow bodies 1a forming a common duct in the press direction. Correspondingly, a possible air flow for drying, introduced into the filter chambers 6d, and received by the filtrate vats 6a through the solids cake and filter media 7 will flow via the drainage outlet 6b and the passage 5a to the insides of the hollow bodies 1a forming a common duct in the press direction

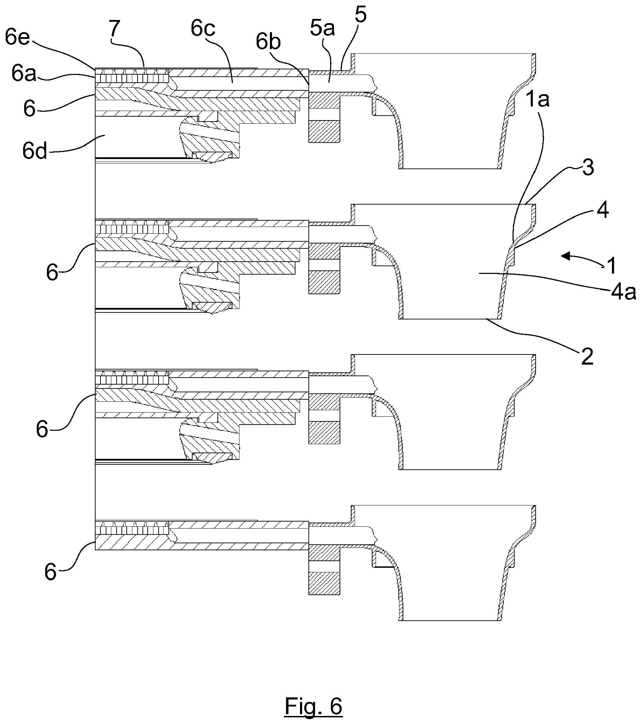

Furthermore, Fig. 5 illustrates multiple plate elements 6 one above another and pressed against each other, corresponding to a closed state of a horizontal pressure filter 8. The positions of the collector elements 1 with respect to each other corresponds to the situation of Fig. 3. That is, the first end portions 2 of preceding collector elements 1 extend into the second opening portions 3 of subsequent collector elements 1, thus forming a contiguous duct. Consequently, a closed filter chamber 6d is formed between a preceding plate element 6, and a subsequent plate element 6, i.e. upper and lower plate elements 6, respectively. Slurry is fed into the filter chamber 6d, while filtrate separated from the slurry passes through the filter medium 7 into the filtrate vat 6a of the subsequent plate element 6. Moreover, the filtrate vat 6a of the plate elements 6 illustrated in Figs. 5 and 6 have been formed on the plate elements 6 as a recessed portions thereof.

Furthermore, Fig. 6 illustrates multiple plate elements 6 one above another and spaced apart from each other, corresponding to an open state of a horizontal pressure filter 8. The positions of the collector elements 1 with respect to each other corresponds to the situation of Fig. 4. That is, the first opening portions 2 of preceding collector elements 1 are positioned directly above and spaced apart from the second opening portions 3 of subsequent collector elements, thus forming an effectively continuous duct.

Naturally, any of the plate elements 6 illustrated in Fig. 5 and Fig. 6 may be equipped with multiple drainage outlets 6b and respective collector elements 1.

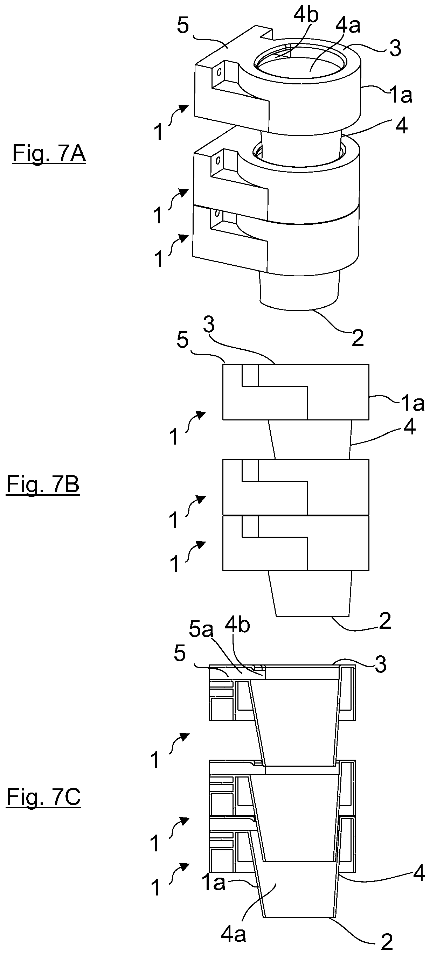

Fig. 7A illustrates a perspective view of multiple collector elements 1 according to another aspect of the disclosure. Fig. 7B illustrates the same as a side view, and Fig. 7C illustrates the same as a cut view. Particularly, the mutual positions of the uppermost collector element 1 and the intermediate collector element 1 represents a preferred respective position between adjacent collector elements 1 of horizontal pressure filter 8 in an open state. Correspondingly, the mutual positions of the lowermost collector element 1 and the intermediate collector element represents a preferred respective position between adjacent collector elements 1 of horizontal pressure filter 8 in a closed state

As can be seen in Fig. 7C the first opening portion of the intermediate collector element 1 extends within the second opening portion 3 of the lowermost collector element, thus forming a contiguous duct between the respective collector elements 1. Also the first opening portion of the uppermost collector element 1 extends within the second opening portion 3 of the intermediate collector element, thus forming a contiguous duct between the respective collector elements 1.

The collector elements 1 Figs 7A - 7C are equipped with a recess 4b formed on the inside of the hollow body 1a, from which recess 4b the passage 5a extends towards the distal end of the coupling portion 5. As most prominently illustrated in Fig 7C, when the first opening portion 2 of a preceding collector element 1 is fully inserted into the second opening portion 3 of the subsequent collector element 1, the presence of recess 4b ensures that a sufficient space is formed between the passage 5a of an subsequent collector element and the preceding collector element for allowing filtrate to flow from the passage 5a to the inside of the hollow body 1a. That is, the recess 4b ensures, that the passage 5a is not blocked by an preceding collector element 1, and thus that filtrate flow, and / or a possible air flow, is not obstructed.

Also most clearly visible in Fig 7C, the collector elements may be dimensioned such that, when the first opening portion 2 of a preceding collector element 1 is fully inserted into the second opening portion 3 of the subsequent collector element, the outside of the intermediate portion 4 of a preceding collector elements 1 fills the second opening portion 3 of the subsequent opening portion 3. This provides for sealing the duct formed by adjacent collector elements, thus preventing filtrate and/or possible air flow leakage even if the duct is pressurized.

Furthermore, the coupling portion 5 may be equipped with a lower surface arranged to abut an upper surface of the second opening portion / and or coupling portion 5 of a subsequent collector element, when the first opening portion 2 of a preceding collector element 1 is fully inserted into the second opening portion 3 of the subsequent collector element. Such an arrangement is advantageous for preventing a preceding collector element from being inserted too deep into a subsequent collector element, and additionally or alternatively, provides for further sealing of the duct.

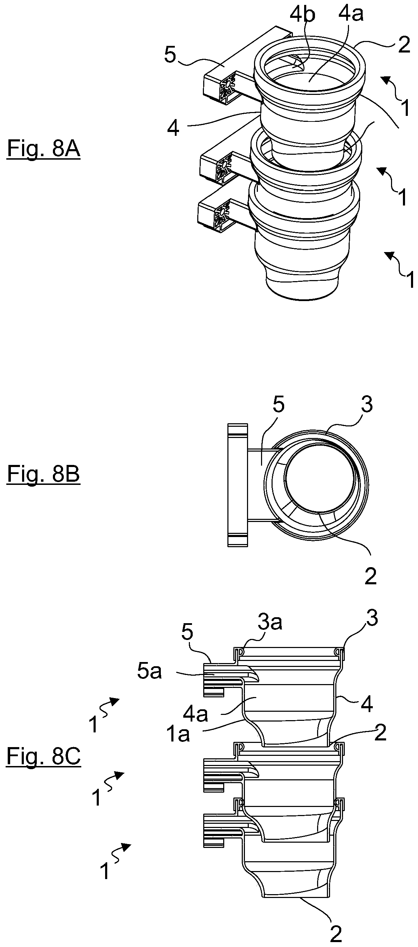

Fig. 8A illustrates a perspective view of multiple collector elements 1 according to another aspect of the disclosure. Fig. 8B illustrates the same as a top view, and Fig. 8C illustrates the same as a cut view, as seen from the side. Particularly, the mutual positions of the uppermost collector element 1 and the intermediate collector element 1 represents a preferred respective position between adjacent collector elements 1 of horizontal pressure filter 8 in an open state. Correspondingly, the mutual positions of the lowermost collector element 1 and the intermediate collector element represents a preferred respective position between adjacent collector elements 1 of horizontal pressure filter 8 in a closed state

As can most clearly be seen from Fig 8B, the first opening portion 2 and the second opening portion are arranged eccentrically with respect to each other. Suitably, as in the situation of Fig. 8B, the first opening portion 2 and the second opening portion 3 are arranged eccentrically with respect to each other such that the first opening portion 3 is positioned away from the coupling portion 5. Such an arrangement ensures that a sufficient space is formed between the passage 5a of an subsequent collector element and the preceding collector element 1 for allowing filtrate and/or a possible air flow to flow from the passage 5a to the inside of the hollow body 1a. That is, the eccentrically positioned opening portions 2, 3 ensures, that the passage 5a is not blocked by a preceding collector element 1, and thus that filtrate flow and/or a possible air flow is not obstructed.

The collector element 1 is provided with a concave section on the outer surface of the hollow body for ensuring a sufficient space between the passage 5a of an subsequent collector element and the preceding collector element 1 for allowing filtrate and/or possible airflow to flow from the passage 5a to the inside of the hollow body 1a. As can be seen in fig. 8C, the concave section is arranged such that, when a preceding collector element 1 is inserted into a subsequent collector element 1 so as to correspond to their mutual positions in a horizontal pressure filter 8 in a closed state, the concave section is positioned opposite to the passage 5a of the subsequent collector element.

The collector element 1 may be provided with a sealing means 3a for sealing the duct formed by adjacent collector elements 1, when positioned so as correspond to their mutual positions in horizontal pressure filter 8 in the closed state. Advantageously, the sealing means 3a are provided as a sealing strip surrounding the second opening portion as illustrated in Fig 8C.

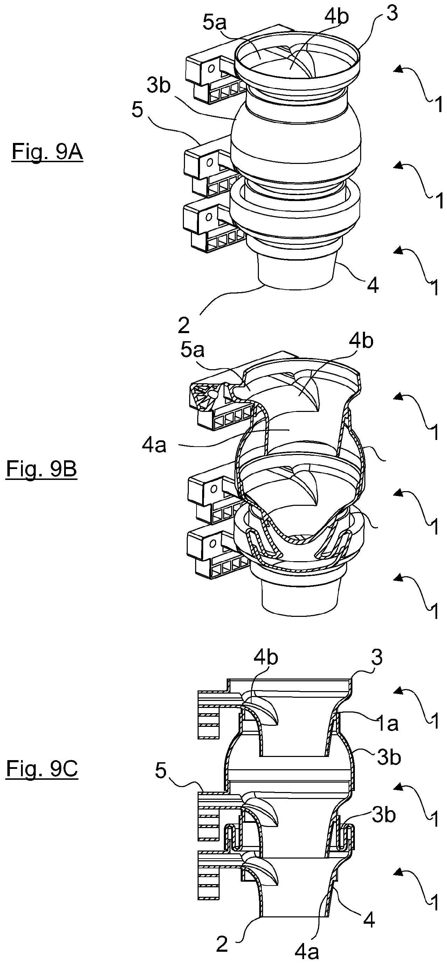

Fig. 9A illustrates a perspective view of multiple collector elements 1 according to another aspect of the disclosure. Fig. 9B illustrates the same as partial a cut view and Fig. 9C illustrates the same as a cut view, as seen from the side. Particularly, the mutual positions of the uppermost collector element 1 and the intermediate collector element 1 represents a preferred respective position between adjacent collector elements 1 of horizontal pressure filter 8 in an open state. Correspondingly, the mutual positions of the lowermost collector element 1 and the intermediate collector element 1 represents a preferred respective position between adjacent collector elements 1 of horizontal pressure filter 8 in a closed state.

The collector elements 1 of Figs. 9A - 9C are equipped with an expandable sealing means 3b provided as a bellows-type expandable seal extending from around the second opening portion 3 of a subsequent collector element 1 up to an outer surface of the hollow body 1a of the preceding collector element 1a. Although the arrangement of the collector elements 1 sufficiently prevents filtrate contamination to the surroundings, such expandable sealing means 3b may be provided for preventing filtrate fumes from reaching the surroundings.

Moreover, the collector elements 1 of Figs. 9A - 9C have an alternative recess 4b formed on the inside of the hollow body. Particularly, the alternative recess 4b forms a chute for the filtrate flowing from the passage 5a into the inside of the hollow body 1a. Furthermore, the alternate recess 4b illustrated in Fig. 9A - 9C provides for a less turbulent filtrate flow within the inside of the hollow body, as the chute is curved from the passage 5a towards the first opening portion 2.

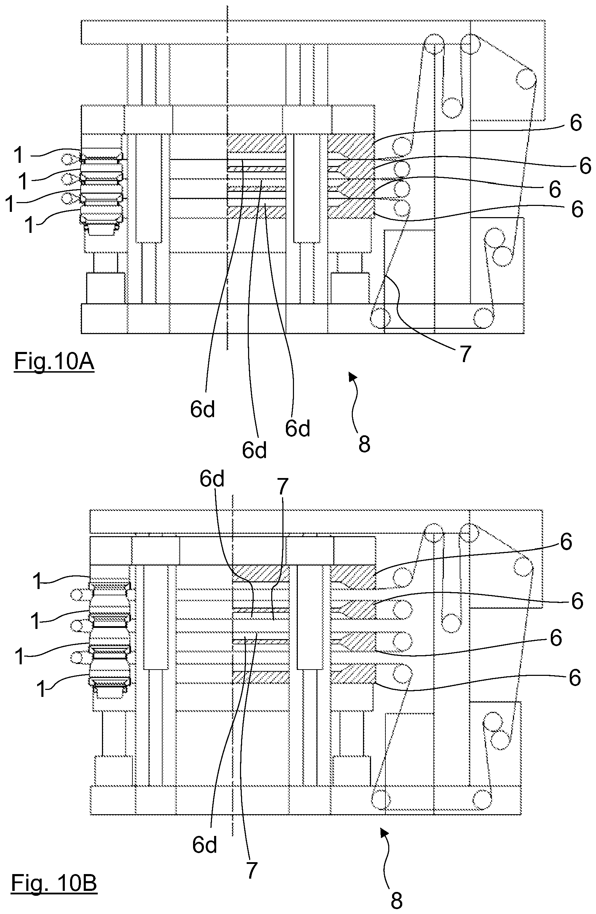

In the above, particularly with reference to Figs. 5 and 6, the description has been explained in connection with a single-sided plate element. However, it is apparent to the skilled person, that the embodiments of the description are equally applicable with other types of plate elements for horizontal filter presses, such as a double-sided -type filter plate element 6, as illustrated in Fig. 10A and Fig 10B. A portion of the plate elements are shown as a cut view in order to illustrate how filter chambers 6d are formed with such double-sided -type plate elements 6.

Moreover, Fig 10A and Fig. 10B illustrate schematic views of an exemplary horizontal pressure filter 8 in a closed state and an open state, respectively. Multiple plate elements 6 are disposed one above another and are movable towards each other into a closed state, and away from each other into an open state. A filter medium 7 is led twice between each pair of plate elements 6 as a web in a zig-zag manner. Collector elements 1 can be seen on the side of the plate elements 6. During the filtration process, slurry is led into between the two separate layers of filter medium 7. Filtrate is separated from the slurry by both separate filter medium layers, and received by filtrate vats of both of the plate elements 6 above and below the filter chamber 6d. Filtrate separated from a slurry by the filter medium 7 is led from each plate element 6 to its respective collector element 1 which form a vertical conduit between adjacent plate elements 6 as described above in greater detail in context with single-sided plate elements. Naturally, any of the plate elements 6 illustrated in Figs. 10A and 10B may be equipped with multiple drainage outlets and respective collector elements 1.

Contrary to the single-sided -type plate elements discussed earlier, the double-sided -type plate elements 6 illustrated in Figs 10A and 10B form filter chambers 6d with adjacent plate elements 6, both above and below the double-sided plate element 6 in question. This enables a filtrate vat to be provided to on both the top and bottom surfaces of the filter chamber 6d. Particularly, the intermediate double-sided plate elements 6 (i.e. the plate element between the uppermost and lowermost plate elements) have, on both sides, portions forming a filter chamber 6d with and adjacent plate element, and respectively, a filtrate vat for each of these portions. Naturally, the uppermost and lowermost plate elements only have a single filter chamber forming portion and a respective filtrate vat.

This enables two layers of the filter medium 7 to be provided in to the filter chamber 6d, such that filtrate is introduced into between the two separate layers of filter medium 7. As a result, the surface area of the filter medium 7, through which the filtrate separated from the slurry will flow, is doubled. In other word, such an arrangement enables filtrate to flow through the filtrate medium 7 into a filtrate vat both on the upper and lower surfaces of the filter chamber 6d. This is particularly advantageous if the slurry is difficult to filter and only thin solids cakes can be formed.

It should also be noted, that in the context of both single-sided and double-sided plate elements, a filtrate vat can be implemented in various ways. Hence, any construction in a plate element 6 used to receive and collect filtrate from the filter medium 7, and further to guide the filtrate towards a drainage outlet of the plate element, can be considered as filtrate vat. For example, the filtrate vat may be implemented as one or more recessed portions or grooves forming a common channel for receiving filtrate from the associated filter medium 7.

According to a first aspect of the disclosure, a horizontal pressure filter 8 filtrate collector element 1 for forming a vertical conduit between adjacent filter plates 6 is provided. The collector element 1 comprises a hollow body 1a forming a first opening portion 2, a second opening portion 3, and an intermediate portion 4.

The intermediate portion 4 forms, within the hollow body 1a, a conduit 4a in a press direction between the first opening portion 2 and the second opening portion 3. In this context, the press direction refers to the direction in which the pressure filter's 8 plate elements 6 are pressed towards and retracted away from each other. In other words, the press direction corresponds, in a horizontal pressure filter 8, when in use, to the vertical direction.

The collector element 1 further comprises a coupling portion 5 for coupling the collector element 1 with a pressure filter plate element 6. The coupling portion 5 extends from the body 1a, preferably at the intermediate portion 4, in a direction transverse to the press direction. The coupling portion 5 has a passage 5a for providing fluid communication between the inside of the hollow body 1a and a drainage outlet 6b of a pressure filter plate element 6. Suitably, the passage 5a extends from the inside of the hollow body 1a, preferably at the intermediate portion 4, within the coupling portion 5 up to a distal end of the coupling portion 5.

The first opening portion 2 and the second opening portion 3 are arranged such that a first opening portion 2 of a preceding collector element 1 can be at least partly nested in the second opening portion 3 of a subsequent collector element 1". Particularly, the outer dimension first opening portion 2 is smaller than the inner dimension of the second opening portion 3. This enables a continuous duct to be formed by the conduits 4a of adjacent collector elements 1.

According to a second aspect of the disclosure, the coupling portion 5 may be equipped with mounting means for mechanically attaching the collector element 1 to a pressure filter plate element 6 in a rigid manner. For example, one or more through holes, threaded blind holes, pins, clamps, etc. may be provided for attaching the collector element 1 to a pressure filter plate element 6. Preferably, the mounting means are arranged, for example by positioning, such that attaching the collector element 1 to a plate element 6 will result the passage 5a being connected to a drainage outlet 6b of the plate element 6 so as to provide fluid communication.

According to a third aspect of the disclosure, a recess 4b may be formed within the hollow body 1a, such that the passage 5a is arranged at the recess 5b. That is, the passage 5a is arranged to provide fluid communication between the recess 4b and a drainage outlet 6b of a pressure filter medium 6. Suitably, the passage 5a extends between the hollow body 1a, via the recess 4b, and a distal end of the coupling portion 5. In other words, an opening of the passage 5a, on the hollow body 1a side thereof is positioned at the recess 4b. Suitably, the recess 4b is formed at the intermediate portion 4.

Providing a recess 4b, and arranging the passage 5a therein, prevents a first opening portion 2 or an intermediate portion 4 of a preceding collector element 1, when inserted into a second opening portion 3 of an subsequent collector element 1, from blocking the opening of the passage on the inside of the hollow body 1a, and thus from preventing filtrate flow into to the conduit. Furthermore, this ensure that less splashing towards the second opening portion 3 occurs
According to a fourth aspect of the disclosure, the passage 5a may preferably be arranged so as to open towards the first opening portion 2. Alternatively, or additionally, the recess 4b may be arranged to open towards the first opening portion 2. Such arrangements further ensure that a first opening portion 2 or an intermediate portion 4 of a preceding collector element 1, when inserted into a second opening portion 3 of a subsequent collector element 1, can not obstruct the flow of the filtrate from the passage 5a into the hollow body 1a. In addition, as such arrangements effectively direct the filtrate flow from the passage 5a directly towards the first opening portion 2, the filtrate flow is less restricted and less splashing towards the second opening portion 3 occurs.

According to a fifth aspect of the disclosure, the first opening portion 2 and the second opening portion 3 are arranged eccentrically with respect to each other. This ensures that, when a first opening portion of a preceding collector element 1 is inserted into a second opening portion of a subsequent collector element 1, a space having an eccentric annular or crescent cross-sectional shape is formed between an outer surface of the hollow body 1a of an preceding collector element and an inner surface of the hollow body 1a of the of the subsequent collector element 1. Such a space between successive collector elements 1 ensures an adequate flow route for filtrate flowing from the passage 5a. The first opening portion 2 is positioned eccentrically with respect to the second opening portion 3 in a direction away from the passage 5a.

A curved section is arranged on the hollow body 1a such that a concave section is arranged on the outer surface thereof. Most suitably such a curved section is arranged on a transition region between the first opening portion 2 and the intermediate portion 4. It is preferred that such a curved surface is arranged so that, when a collector element 1 is inserted into a subsequent collector element 1, the curved section opposes the passage 5a of the subsequent collector element 1. This provides flow route having a continuous shape for the filtrate from the passage 5a to the inside of the hollow body 1a. Flow properties of the filtrate are further improved and less spillage occurs. According to a sixth aspect of the disclosure, the first opening portion 2, the second opening portion 3, or both may be equipped with a sealing means for sealing a connection between a first opening portion 2 of a preceding collector element 1 and a second opening portion 3 of a subsequent collector element 1. Preferably such sealing means are arranged to seal a connection between a first opening portion 2 of a preceding collector element 1 and a second opening portion 3 of a subsequent collector element 1 when the collector elements are in a closed position with respect to each other. This prevents leakage from between the adjacent opening portions 2, 3 even when the filtrate in the conduit 4a is pressurized. The sealing means may be provided, for example, as a sealing strip surrounding the respective opening portion 2, 3.

It should be noted, that the features of any two or more of the collector element aspects discussed above may be combined without departing the scope of the disclosure.

According to a seventh aspect of the disclosure, a horizontal pressure filter plate element 6 is provided.

The plate element 6 comprises a filtrate vat 6a for receiving filtrate during operation of a horizontal pressure filter 8. The filtrate vat 6a does not need to be a separate component, but is suitably formed on the plate element 6, as a portion thereof. The plate element 6 further comprises a drainage outlet 6b having a drainage duct 6c for providing fluid communication between the filtrate vat 6a and the drainage outlet 6b. Suitably, the drainage outlet 6b is formed on a side of the plate element 6 and the drainage duct 6c is formed within the plate element 6. The plate element 6 is equipped with a collector element 1 as discussed in connection with any of the preceding collector element aspects, such that the coupling portion 5 of the collector element 1 is coupled with the drainage outlet 6b of the plate element 6 for providing fluid communication between the filtrate vat 6a and the inside of the hollow body 1a of the collector element 1. Particularly, the passage 5a of the collector element is coupled with the drainage outlet 6b. Preferably, the collector element 1 is also mechanically fixed to the plate element 6 by the coupling portion 5.

According to an eighth aspect of the disclosure, a horizontal pressure filter 8 having multiple plate elements 6, is provided. The horizontal pressure filter 8 has an open state and a closed state.

In the closed state, adjacent plate elements 6 are pressed substantially against each other. That is, the plate elements are pressed against each other, while some components, such as filter media 7and sealing means, may be located between the adjacent plate elements 6. The horizontal pressure filter 8 is further arranged, in the closed state, for separating filtrate from a slurry, thus producing a solids cake between adjacent plate elements 6.

In the open state, adjacent plate elements 6 are retracted to a distance from each other for enabling removal of the solid cake from between adjacent plate elements.

Particularly, at least one of the plate elements used is a plate element 6 according to the preceding plate element aspect, as discussed above.

According to a ninth aspect of the disclosure, in the horizontal pressure filter 8 according to the pressure filter aspect discussed above, the collector elements 1 of each plate element 6 are arranged such that, both in the closed state and the open state, conduits 4a of the collector elements in adjacent plate elements form an effectively continuous filtrate duct in the press direction between each adjacent plate element 6. That is, the insides of the hollow bodies 1a of each collector element 1 form, both in the open state and the closed state, an effectively continuous filtrate duct in the press direction between each adjacent plate element 6. Particularly, in the open state, the first opening portion 2 of a preceding collector element does not necessarily need to be within a second opening portion 3 of a subsequent collector element 1, but the opening portions 2, 3 may be retracted up to a distance from each other. That is, the term effectively continuous is used in this context to describe that filtrate from a first opening portion 2 will flow into a second opening portion 3 without splashing or contaminating the surroundings. This can be achieved even if the respective first opening portion 2 and the second opening portion 3 are at a distance from each other, as the diameter of the first opening portion 2 is smaller than that of the second opening portion 3. Consequently, the filtrate from preceding collector element 1 will have a characteristic cross sectional dimension of the first opening portion 2. Further, as the flow direction between adjacent collector elements 1 is vertical, the characteristic cross sectional dimension of the filtrate flowing between adjacent collector elements 1 will remain substantially the same at the interstice between the opening portions 2, 3, even if the respective opening portion 2, 3 are retracted up to a distance from each other.

According to a tenth aspect of the disclosure, in the open state, a first opening portion 2 of a preceding collector element 1 extends preferably at least up to the level of a second opening portion 3 of subsequent collector element 1, thus forming an uninterrupted filtrate duct in the press direction between each adjacent plate element 6. In other words the first opening portion 2 of a preceding collector element 1 does not need to be within the second opening portion 3 of the subsequent collector element 1, but is preferably not at a distance therefrom, either.

According to an eleventh aspect of the disclosure, in the open state, a first opening portion 2 of a preceding collector element preferably extends within a second opening portion 3 of a subsequent collector element 1, thus forming a contiguous filtrate duct in the press direction between each adjacent plate element 6. In other words, a filtrate duct is formed by the conduits 4a of the successive collector elements 1 connected throughout in an unbroken sequence. It should be noted, that in the open state, the consecutive collector elements 1 do not need to be in physical contact with each other, but the contiguous duct is formed as the first opening portion 2 of a preceding collector element extends within a second opening portion 3 of subsequent collector element.

According to a twelfth aspect of the disclosure, at least one preceding collector element 1 and a subsequent collector element 1 of a horizontal pressure filter 8 are preferably equipped with an expandable sealing means 3b, suitably of the bellows type, extending between a preceding collector element 1 and a subsequent collector element 1. For example, the expandable sealing means 3b may extend between a first opening portion 2 of a preceding collector element 1 and a second opening portion 3 of a subsequent collector element 1. Alternatively, the expandable sealing means may extend between an outer surface of the hollow body 1a of a preceding collector element 1 and a second opening portion 3 of a subsequent collector element. Preferably, but not necessarily, each of the successive collector elements 1 are equipped with such expandable sealing means 3b. Particularly, the expandable sealing means may be provided so as to reduce, during the open state, fumes emissions of the filtrate flowing in the filtrate duct from contaminating the surroundings. For example, bellows made from rubber or other elastomers may be used as the expandable sealing means.

According to a thirteenth aspect of the disclosure, the expandable sealing means 3b may be gas-impermeable, in which case such fume emission may be avoided all together.

According to a fourteenth aspect of the disclosure, collector elements 1 of adjacent plate elements 6 in a horizontal pressure filter 8 are advantageously arranged such that, at least in the closed state, the preceding collector element 1 is spaced apart from the passage 5a at the inside of the hollow body 1a of an subsequent collector element 1. Such arrangement ensures the preceding collector element, particularly, the first opening portion 2, intermediate portion 4, or both, thereof does not obstruct filtrate flow from the passage 5a of the coupling portion 5 to the conduit 4a of the subsequent collector element 1.

It should be noted, that the features of any two or more of the pressure filter aspects discussed above may be combined without departing the scope of the disclosure.

According to a fifteenth aspect of the disclosure, a method for providing a continuous filtrate duct between adjacent plate elements 6 of a horizontal pressure filter 8 is provided. In the method, a horizontal pressure filter 8 having multiple plate elements 6 is provided. Further, the pressure filter 8 has a closed state and an open state.

In the closed state, adjacent plate elements 6 are pressed substantially against each other for separating filtrate from a slurry, thus producing a solids cake between adjacent plate elements 6. It should be noted, that additional components such as filter media and sealing means may be located between the adjacent plate elements

In the open state, adjacent plate elements 6 are retracted to a distance from each other for enabling removal of the solids cake from between adjacent plate elements.

Each plate element 6 is provided with at least one collector element according to any of the collector element aspects, as discussed above
The coupling portions 5 of the collector elements 1 are attached to the plate elements 6, such that the passage 5a of the coupling portion 5 is coupled with the drainage outlet 6b of the plate element 6, so as to provide fluid communication between the filtrate vat and the hollow body 1a of the collector element 1.

According to a sixteenth aspect of the disclosure, in the method for providing a continuous filtrate duct, each of the collector elements 1 are suitably arranged such that, both in the closed state and the open state, conduits of the collector elements 1 in adjacent plate elements 6 form an effectively continuous filtrate duct in the press direction between each adjacent plate element 6. That is, the insides of the hollow bodies 1a of each collector element 1 form, both in the open state and the closed state, an effectively continuous filtrate duct in the press direction between each adjacent plate element 6. Particularly, in the open state, the first opening portion 2 of a preceding collector element 1 does not necessarily need to be within a second opening portion 3 of a subsequent collector element 1, but the opening portions 2, 3 may be retracted up to a distance from each other. That is, the term effectively continuous is used in this context to describe that filtrate from a first opening portion 2 will flow into a second opening portion 3 without splashing or contaminating the surroundings. This can be achieved even if the respective first opening portion 2 and the second opening portion 3 are at a distance from each other, as the diameter of the first opening portion 2 is smaller than that of the second opening portion 3. Consequently, the filtrate from a preceding collector element 1 will have a characteristic cross sectional dimension of the first opening portion 2. Further, as the flow direction between adjacent collector elements 1 is vertical, the characteristic cross sectional dimension of the filtrate flowing between adjacent collector elements 1 will remain substantially the same at the interstice between the opening portions 2, 3, even if the respective opening portion 2, 3 are retracted up to a distance from each other.

According to a seventeenth aspect of the disclosure, in the method for providing a continuous filtrate duct, each of the collector elements 1 are suitably arranged such that, in the open state, a first opening portion 2 of a preceding collector element 1 extends at least up to the level of a second opening portion 3 of subsequent collector element 1, thus forming an uninterrupted filtrate duct in the press direction between each adjacent plate element 6. In other words the first opening portion 2 of a preceding collector element 1 does not need to be within the second opening portion 3 of the subsequent collector element 1, but is preferably not at a distance therefrom, either.

According to an eighteenth aspect of the disclosure, in the method for providing a continuous filtrate conduit, each of the collector elements 1 are arranged such that, in the open state, a first opening portion 2 of a preceding collector element extends within a second opening portion 3 of subsequent collector element 1, thus forming a contiguous filtrate duct in the press direction between each adjacent plate element 6. In other words, a filtrate duct is formed by the conduits 4a of the successive collector elements 1 connected throughout in an unbroken sequence. It should be noted, that in the open state, the consecutive collector elements 1 do not need to be in physical contact with each other, but the contiguous duct is formed as the a first opening portion 2 of a preceding collector element extends within a second opening portion 3 of subsequent collector element.

According to a nineteenth aspect of the disclosure, in the method for providing a continuous filtrate conduit, expandable sealing means 3b, suitably of the bellows type, are advantageously provided such that at least one preceding collector element 1 and a subsequent collector element 1 are equipped with said expandable sealing means 3b extending between a preceding collector element 1 and a subsequent collector element 1. For example, the expandable sealing means 3b may extend between a first opening portion 2 of a preceding collector element 1 and a second opening portion 3 of a subsequent collector element. Alternatively, the expandable sealing means 3b may extend between an outer surface of the hollow body 1a of a preceding collector element 1 and a second opening portion 3 of a subsequent collector element. Preferably, but not necessarily, each of the successive collector elements 1 are equipped with such expandable sealing means 3b. Particularly, the expandable sealing means 3b may be provided so as to reduce, during the open state, fumes emissions of the filtrate flowing in the filtrate duct from contaminating the surroundings. For example, rubber bellows may be used as the expandable sealing means. Preferably, the expandable sealing means 3b are gas-impermeable, in which case such fume emission may be avoided all together.

According to a twentieth aspect of the disclosure, in the method for providing a continuous filtrate conduit, each of the collector elements 1 of adjacent plate elements 6 in a horizontal pressure filter 8 are advantageously arranged such that, at least in the closed state, the preceding collector element 1 is spaced apart from the passage 5a at the inside of the hollow body 1a of an subsequent collector element 1. Such arrangement ensures the preceding collector element, particularly, the first opening portion 2, intermediate portion 4, or both, thereof does not obstruct filtrate flow from the passage 5a of the coupling portion 5 to the inside of the hollow body 1a of the subsequent collector element 1.

It should be noted, that the features of any two or more of the aspects concerning a method for providing a continuous filtrate conduit, as discussed above, may be combined without departing the scope of the disclosure.

According to a twenty-first aspect of the disclosure, a method for operating a horizontal pressure filter 8 is provided. In said method, a horizontal pressure filter 8 according to any of the preceding pressure filter aspect is provided.

A filter chamber 6d is formed by positioning the plate elements 6 in a closed state. While in said closed state, a slurry feed is provided into the filter chamber 6.

At a predetermined instance, said slurry feed into the filter chamber 6d is suspended. After said slurry feed has been suspended, the plate elements 6 are positioned in an open state. While in said in said open state, a solids cake formed during the closed state is removed from between plate elements.

It is apparent to a person skilled in the art that as technology advances, the basic idea of the may vary within the scope of the claims.

## Claims

1. A horizontal pressure filter (8) having multiple plate elements (6), having a closed state and an open state, such that
- in the closed state, adjacent plate elements (6) are pressed substantially against each other for separating filtrate from a slurry, thus producing a solids cake between adjacent plate elements (6), and
- in the open state, adjacent plate elements (6) are retracted to a distance from each other for enabling removal of the solid cake from between adjacent plate elements (6),
wherein at least one of the multiple plate elements is a plate element comprising
- a filtrate vat (6a), preferably formed as portion of said plate element, for receiving filtrate, and
- at least one drainage outlet (6b) having a drainage duct (6c) for providing fluid communication between the filtrate vat (6a) and the drainage outlet (6b), and
- a filtrate collector element (1) for forming a vertical duct between adjacent filter plates (6), having a hollow body (1a) forming a first opening portion (2), a second opening portion (3), and an intermediate portion (4), wherein the intermediate portion (4) forms, within the hollow body (1a), a conduit (4a) in a press direction between the first opening portion (2) and the second opening portion (3), and
wherein the collector element (1) further comprises a coupling portion (5) for coupling the collector element (1) with a pressure filter plate element (6), said coupling portion extending from the body (1a) of the collector element in a transverse direction to the press direction, and having a passage (5a) for providing fluid communication between the inside of the hollow body (1a) and a drainage outlet (6b) of a pressure filter plate element (6),
wherein the coupling portion (5) of the collector element is coupled with the drainage outlet (6b) of the plate element (6), so as to provide fluid communication between the filtrate vat (6a) and the hollow body (1a) of the collector element.
wherein the outer dimension of the first opening portion (2) is smaller than the inner dimension of the second opening portion (3), such that first opening portion (2) of a preceding collector element (1) can be at least partly nested in the second opening portion (3) of a subsequent collector element (1),
**characterized in that** the first opening portion (2) and the second opening portion (3) are arranged eccentrically with respect to each other, such that when a first opening portion (2) of a preceding collector element (1) is inserted into a second opening portion (3) of a subsequent collector element (1), a space having an eccentric annular or crescent cross-sectional shape is formed between an outer surface of the hollow body (1a) of a preceding collector element (1) and an inner surface of the hollow body (1a) of the of the subsequent collector element (1), and
wherein a curved section being arranged on the hollow body (1a) such that a concave section is arranged on the outer surface thereof, said curved section being arranged on a transition region between the first opening portion (2) and the intermediate portion (4) so that, when a collector element (1) is inserted into a subsequent collector element (1), the curved section opposes the passage (5a) of the subsequent collector element (1) to provide a flow route having a continuous shape for the filtrate from the passage (5a) to the inside of the hollow body (1a).

2. The horizontal pressure filter according to Claim 1, **characterized in that** the coupling portion (5) is equipped with means for mechanically attaching the collector element to a pressure filter plate element (6) in a rigid manner.

3. The horizontal pressure filter (1) according to Claim 1 or 2, **characterized in that** a recess (4b) is formed within the hollow body (1a), wherein said passage (5a) being arranged to provide fluid communication between the recess (4b) and a drainage outlet (6b) of a pressure filter plate element (6).

4. The horizontal pressure filter (1) according to Claim 3, **characterized in that**, said recess (4b), said passage (5a) at the recess (4b), or both, open towards the first opening portion (2).

5. The horizontal pressure filter (1) according to any of the preceding Claims 1-4, **characterized in that** the first opening portion (2), the second opening portion (3), or both, are equipped with a sealing means (3a) for sealing a connection between a first opening portion (2) of a preceding collector element (1) and a second opening portion (3) of a subsequent collector element (1).

6. The horizontal pressure filter (8) according to any of the preceding Claims 1-5, **characterized in that** collector elements (1) of each plate element (6) are arranged such that, both in the closed state and the open state, conduits (4a) of the collector elements (1) in adjacent plate elements form an effectively continuous filtrate duct in the press direction between each adjacent plate element (6).

7. A horizontal pressure filter (8) according to any of the preceding Claims 1-6, **characterized in that**, in the open state, a first opening portion (2) of a preceding collector element (1) extends at least up to the level of a second opening portion (3) of subsequent collector element (1), thus forming an uninterrupted filtrate duct in the press direction between each adjacent plate element (6).

8. A horizontal pressure filter (8) according to any of the preceding Claims 1-7, **characterized in that**, in the open state, a first opening portion (2) of a preceding collector element (1) extends within a second opening portion (3) of subsequent collector element (1), thus forming a contiguous filtrate duct in the press direction between each adjacent plate element (6).

9. A horizontal pressure filter according to any of the preceding Claims 1-9, **characterized in that**, at least one preceding collector element (1) and a subsequent collector element (1) are equipped with an expandable sealing means (3b) of the bellows type extending between a first opening portion (2) the preceding collector element (1) and a second opening portion (3) of a subsequent collector element (1).

10. A horizontal pressure filter according Claim 9, **characterized in that** said expandable sealing means (3b) are gas-impermeable.

11. A horizontal pressure filter according to any of the preceding Claims 1-10, **characterized in that** collector elements (1) of adjacent plate elements (6) are arranged such that, at least in the closed state, the preceding collector element (1) is spaced apart from the passage (5a) at the inside of the hollow body (1a) of a subsequent collector element (1), such that the a preceding collector element (1) does not obstruct filtrate flow from the passage (5a) to the inside of the hollow body (1a) of the subsequent collector element.

12. A method for providing a continuous filtrate conduit between adjacent plate elements (6) of a horizontal pressure filter (8), comprising the steps of
a) providing a horizontal pressure filter (8) having multiple plate elements (6), wherein the pressure filter (8) has a closed state and an open state, such that
- in the closed state, adjacent plate elements (6) are pressed against each other, while some components may be located between the adjacent plate elements 6, for separating filtrate from a slurry, thus producing a solids cake between adjacent plate elements (6), and
- in the open state, adjacent plate elements (6) are retracted to a distance from each other for enabling removal of the solid cake from between adjacent plate elements (6),
**characterized by**
b) providing, for each plate element, at least one collector element (1) for forming a vertical duct between adjacent filter plates (6), having a hollow body (1a) forming a first opening portion (2), a second opening portion (3), and an intermediate portion (4),
wherein the intermediate portion (4) forms, within the hollow body (1a), a conduit (4a) in a press direction between the first opening portion (2) and the second opening portion (3),
wherein the collector element (1) further comprises a coupling portion (5) for coupling the collector element (1) with a pressure filter plate element (6), said coupling portion extending from the body (1a) of the collector element in a transverse direction to the press direction, and having a passage (5a) for providing fluid communication between the inside of the hollow body (1a) and a drainage outlet (6b) of a pressure filter plate element (6),
wherein the outer dimension of the first opening portion (2) is smaller than the inner dimension of the second opening portion (3), such that first opening portion (2) of a preceding collector element (1) can be at least partly nested in the second opening portion (3) of a subsequent collector element (1),
wherein the first opening portion (2) and the second opening portion (3) are arranged eccentrically with respect to each other, such that, when a first opening portion of a preceding collector element (1) is inserted into a second opening portion of a subsequent collector element (1), a space having an eccentric annular or crescent cross-sectional shape is formed between an outer surface of the hollow body (1a) of a preceding collector element and an inner surface of the hollow body (1a) of the of the subsequent collector element (1), and
wherein a curved section being arranged on the hollow body (1a) such that a concave section is arranged on the outer surface thereof, said curved section being arranged on a transition region between the first opening portion (2) and the intermediate portion (4) so that, when a collector element (1) is inserted into a subsequent collector element (1), the curved section opposes the passage (5a) of the subsequent collector element (1) to provide a flow route having a continuous shape for the filtrate from the passage (5a) to the inside of the hollow body (1a), and
c) attaching the coupling portion (5) of the collector elements (1) to the plate elements (6), such that the passage (5a) of the coupling portion (5) is coupled with the drainage outlet (6b) of the plate element (6b), so as to provide fluid communication between the filtrate vat (6a) and the inside of the hollow body (1a) of the collector element (1).

13. The method according to Claim 12, **characterized by** the method further comprising the step of:
d) arranging each of the collector elements (1) such that, both in the closed state and the open state, the insides of the hollow bodies (1a) of the collector elements (1) in adjacent plate elements (6) form an effectively continuous filtrate duct in the press direction between each adjacent plate element (6).

14. The method according to Claim 12 or 13, **characterized by** the method further comprising the step of:
e) arranging each of the collector elements (1) such that, in the open state, a first opening portion (2) of a preceding collector element (1) extends at least up to the level of a second opening portion (3) of subsequent collector element (1), thus forming an uninterrupted filtrate duct in the press direction between each adjacent plate element (6).

15. The method according to any of the preceding Claims 12-14, **characterized by** the method further comprising the step of:
f) arranging each of the collector elements (1) such that, in the open state, a first opening portion (2) of a preceding collector element (1) extends within a second opening portion (3) of subsequent collector element (1), thus forming a contiguous filtrate duct in the press direction between each adjacent plate element (6).

16. The method according to any of the preceding Claims 12-15, **characterized by** the method further comprising the step of:
g) providing an expandable sealing means (3b) of the bellows type, such that at least one preceding collector element (1) and a subsequent collector element (1) are equipped with the expandable sealing means (3b) extending between the first opening portion (2) of the preceding collector element (1) and the second opening portion (3) of the subsequent collector element (1).

17. The method according to any of the preceding Claims 12-16, **characterized by** the method further comprising the step of:
h) arranging each of the collector elements (1) of adjacent plate elements (6) such that, at least in the closed state, the preceding collector element (1) is spaced apart from the passage (5a) at the inside of the hollow body 1a of an subsequent collector element (1), such that the preceding collector element (1) does not obstruct filtrate flow from the passage (5a) to the inside of the hollow body (1) of the subsequent collector element (1).

18. A method for operating a horizontal pressure filter (8), **characterized by** providing the horizontal pressure filter (8) according to any of the Claims 1-11, and further comprising the steps of:
- forming a filter chamber (6d) by positioning the plate elements (6) in a closed state;
- in said closed state, providing a slurry feed into the filter chamber (6d), and, at a predetermined instance, suspending said slurry feed into the filter chamber (6d);
- after said slurry feed has been suspended, positioning the plate elements (6) in an open state, and
- in said open state, removing solids cake formed during closed state from between plate elements (6).

## Patentansprüche

1. Horizontaler Druckfilter (8) mit mehreren Plattenelementen (6), der einen geschlossenen Zustand und einen geöffneten Zustand aufweist, so dass
- im geschlossenen Zustand, benachbarte Plattenelemente (6) wesentlich aneinander gepresst werden, um ein Filtrat von einer Suspension abzutrennen, wodurch zwischen benachbarten Plattenelementen (6) ein Feststoffkuchen erzeugt wird, und
- im offenen Zustand, benachbarte Plattenelemente (6) auf einen Abstand zueinander zurückgestellt werden, um das Entfernen des Feststoffkuchens aus dem Raum zwischen den benachbarten Plattenelementen (6) zu ermöglichen,
wobei es sich bei mindestens einer der mehreren Plattenelemente um ein Plattenelement handelt, welches aufweist:
- eine Filtratwanne (6a), die vorzugsweise als Abschnitt des Plattenelements ausgebildet ist, zur Aufnahme von Filtrat, und
- mindestens einen Entwässerungsauslauf (6b) mit einem Entwässerungskanal (6c) zur Bereitstellung einer fluidischen Verbindung zwischen der Filtratwanne (6a) und dem Entwässerungsauslauf (6b), und
- ein Filtratsammlerelement (1) zur Ausbildung eines vertikalen Kanals zwischen benachbarten Filterplatten (6), welches einen Hohlkörper (1a) aufweist, der einen ersten Öffnungsabschnitt (2), einen zweiten Öffnungsabschnitt (3) und einen Zwischenabschnitt (4) ausbildet, wobei der Zwischenabschnitt (4) im Hohlkörper (1a) einen Durchlass (4a) in Pressrichtung zwischen dem ersten Öffnungsabschnitt (2) und dem zweiten Öffnungsabschnitt (3) ausbildet, und
wobei das Sammlerelement (1) ferner einen Kopplungsabschnitt (5) zum Verbinden des Sammlerelements (1) mit einem Druckfilterplattenelement (6) umfasst, wobei sich der Kopplungsabschnitt ausgehend vom Körper (1a) des Sammlerelements in einer Richtung quer zur Pressrichtung erstreckt und einen Durchgang (5a) zur Bereitstellung einer fluidischen Verbindung zwischen dem Inneren des Hohlkörpers (1a) und einem Entwässerungsauslauf (6b) eines Druckfilterplattenelements (6) aufweist,
wobei der Kopplungsabschnitt (5) des Sammlerelements mit dem Entwässerungsauslauf (6b) des Plattenelements (6) verbunden ist, um eine fluidische Verbindung zwischen der Filtratwanne (6a) und dem Hohlkörper (1a) des Sammlerelements bereitzustellen,
wobei die Außenabmessung des ersten Öffnungsabschnitts (2) geringer als die Innenabmessung des zweiten Öffnungsabschnitts (3) ist, so dass der erste Öffnungsabschnitt (2) eines vorhergehenden Sammlerelements (1) mindestens teilweise in den zweiten Öffnungsabschnitt (3) eines nachfolgenden Sammlerelements (1) eingesteckt werden kann,
**dadurch gekennzeichnet, dass** der erste Öffnungsabschnitt (2) und der zweite Öffnungsabschnitt (3) exzentrisch zueinander angeordnet sind, so dass, wenn ein erster Öffnungsabschnitt (2) eines vorhergehenden Sammlerelements (1) in einen zweiten Öffnungsabschnitt (3) eines nachfolgenden Sammlerelements (1) eingesetzt wird, zwischen einer Außenfläche des Hohlkörpers (1a) eines vorhergehenden Sammlerelements (1) und einer Innenfläche des Hohlkörpers (1a) des nachfolgenden Sammlerelements (1) ein Zwischenraum mit einer exzentrischen ringförmigen oder sichelförmigen Querschnittsform ausgebildet wird, und
wobei ein gekrümmter Teilabschnitt am Hohlkörper (1a) dergestalt eingerichtet ist, dass an seiner Außenfläche ein konkaver Teilabschnitt angeordnet ist, wobei der gekrümmte Teilabschnitt an einem Übergangsbereich zwischen dem ersten Öffnungsabschnitt (2) und dem Zwischenabschnitt (4) angeordnet ist, so dass, wenn ein Sammlerelement (1) in ein nachfolgendes Sammlerelement (1) eingesetzt wird, der gekrümmte Teilabschnitt dem Durchgang (5a) des nachfolgenden Sammlerelements (1) gegenüberliegt, um für das Filtrat einen Strömungsweg mit kontinuierlicher Form vom Durchgang (5a) zum Inneren des Hohlkörpers (1a) bereitzustellen.

2. Horizontaler Druckfilter nach Anspruch 1, **dadurch gekennzeichnet, dass** der Kopplungsabschnitt (5) mit Mitteln ausgestattet ist, um das Sammlerelement mechanisch mit einem Druckfilterplattenelement (6) starr anzubringen.

3. Horizontaler Druckfilter (1) nach Anspruch 1 oder 2, **dadurch gekennzeichnet, dass** im Hohlkörper (1a) eine Ausnehmung (4b) ausgebildet ist, wobei der Durchgang (5a) so angeordnet ist, dass er eine fluidische Verbindung zwischen der Ausnehmung (4b) und einem Entwässerungsauslauf (6b) eines Druckfilterplattenelements (6) bereitstellt.

4. Horizontaler Druckfilter (1) nach Anspruch 3, **dadurch gekennzeichnet, dass** die Ausnehmung (4b), der Durchgang (5a) an der Ausnehmung (4b), oder beide, sich zum ersten Öffnungsabschnitt (2) hin öffnen.

5. Horizontaler Druckfilter (1) nach einem der vorhergehenden Ansprüche 1 bis 4, **dadurch gekennzeichnet, dass** der erste Öffnungsabschnitt (2), der zweite Öffnungsabschnitt (3), oder beide, mit einem Dichtungsmittel (3a) zum Abdichten einer Verbindung zwischen einem ersten Öffnungsabschnitt (2) eines vorhergehenden Sammlerelements (1) und einem zweiten Öffnungsabschnitt (3) eines nachfolgenden Sammlerelements (1) ausgestattet sind.

6. Horizontaler Druckfilter (8) nach einem der vorhergehenden Ansprüche 1 bis 5, **dadurch gekennzeichnet, dass** Sammlerelemente (1) jedes Plattenelements (6) so angeordnet sind, dass, sowohl im geschlossenen Zustand als auch im geöffneten Zustand, Durchlässe (4a) der Sammlerelemente (1) in benachbarten Plattenelementen einen wirksam durchgehenden Filtratkanal in Pressrichtung zwischen jedem benachbarten Plattenelement (6) ausbilden.

7. Horizontaler Druckfilter (8) nach einem der vorhergehenden Ansprüche 1 bis 6, **dadurch gekennzeichnet, dass** sich im offenen Zustand ein erster Öffnungsabschnitt (2) eines vorhergehenden Sammlerelements (1) mindestens bis zur Ebene eines zweiten Öffnungsabschnitts (3) eines nachfolgenden Sammlerelements (1) erstreckt, wodurch ein ununterbrochener Filtratkanal in Pressrichtung zwischen jedem benachbarten Plattenelement (6) ausgebildet wird.

8. Horizontaler Druckfilter (8) nach einem der vorhergehenden Ansprüche 1 bis 7, **dadurch gekennzeichnet, dass** sich im offenen Zustand ein erster Öffnungsabschnitt (2) eines vorhergehenden Sammlerelements (1) innerhalb eines zweiten Öffnungsabschnitts (3) eines nachfolgenden Sammlerelements (1) erstreckt, wodurch ein zusammenhängender Filtratkanal in Pressrichtung zwischen jedem benachbarten Plattenelement (6) ausgebildet wird.

9. Horizontaler Druckfilter nach einem der vorhergehenden Ansprüche 1 bis 9, **dadurch gekennzeichnet, dass** mindestens ein vorhergehendes Sammlerelement (1) und ein nachfolgendes Sammlerelement (1) mit einem dehnungsfähigen Dichtungsmittel (3b) vom Typ Faltenbalg ausgestattet sind, das sich zwischen einem ersten Öffnungsabschnitt (2) des vorhergehenden Sammlerelements (1) und einem zweiten Öffnungsabschnitt (3) eines nachfolgenden Sammlerelements (1) erstreckt.

10. Horizontaler Druckfilter nach Anspruch 9, **dadurch gekennzeichnet, dass** die dehnungsfähigen Dichtungsmittel (3b) gasundurchlässig sind.

11. Horizontaler Druckfilter nach einem der vorhergehenden Ansprüche 1 bis 10, **dadurch gekennzeichnet, dass** Sammlerelemente (1) von benachbarten Plattenelementen (6) so angeordnet sind, dass mindestens im geschlossenen Zustand das vorhergehende Sammlerelement (1) einen Abstand zum Durchgang (5a) an der Innenseite des Hohlkörpers (1a) eines nachfolgenden Sammlerelements (1) aufweist, so dass das vorhergehende Sammlerelement (1) den Filtratstrom vom Durchgang (5a) zum Inneren des Hohlkörpers (1a) des nachfolgenden Sammlerelements nicht blockiert.

12. Verfahren zur Bereitstellung eines durchgehenden Filtratdurchlasses zwischen benachbarten Plattenelementen (6) eines horizontalen Druckfilters (8), umfassend die Schritte:
a) Bereitstellen eines horizontalen Druckfilters (8) mit mehreren Plattenelementen (6), wobei der Druckfilter (8) einen geschlossenen Zustand und einen geöffneten Zustand aufweist, so dass,
- im geschlossenen Zustand, benachbarte Plattenelemente (6) aneinander gepresst werden, während einige Bauteile zwischen den benachbarten Plattenelementen (6) angeordnet sein können, um ein Filtrat von einer Suspension abzutrennen, wodurch zwischen benachbarten Plattenelementen (6) ein Feststoffkuchen erzeugt wird, und
- im offenen Zustand, benachbarte Plattenelemente (6) auf einen Abstand zueinander zurückgestellt werden, um das Entfernen des Feststoffkuchens aus dem Raum zwischen benachbarten Plattenelementen (6) zu ermöglichen,
**gekennzeichnet durch**
b) für jedes Plattenelement, Bereitstellen mindestens eines Sammlerelements (1) zur Ausbildung eines vertikalen Kanals zwischen benachbarten Filterplatten (6), welches einen Hohlkörper (1a) aufweist, der einen ersten Öffnungsabschnitt (2), einen zweiten Öffnungsabschnitt (3) und einen Zwischenabschnitt (4) ausbildet,
wobei der Zwischenabschnitt (4) im Hohlkörper (1a) einen Durchlass (4a) in Pressrichtung zwischen dem ersten Öffnungsabschnitt (2) und dem zweiten Öffnungsabschnitt (3) ausbildet,
wobei das Sammlerelement (1) ferner einen Kopplungsabschnitt (5) zum Verbinden des Sammlerelements (1) mit einem Druckfilterplattenelement (6) umfasst, wobei sich der Kopplungsabschnitt ausgehend vom Körper (1a) des Sammlerelements in einer Richtung quer zur Pressrichtung erstreckt und einen Durchgang (5a) zur Bereitstellung einer fluidischen Verbindung zwischen dem Inneren des Hohlkörpers (1a) und einem Entwässerungsauslauf (6b) eines Druckfilterplattenelements (6) aufweist,
wobei die Außenabmessung des ersten Öffnungsabschnitts (2) geringer als die Innenabmessung des zweiten Öffnungsabschnitts (3) ist, so dass der erste Öffnungsabschnitt (2) eines vorhergehenden Sammlerelements (1) mindestens teilweise in den zweiten Öffnungsabschnitt (3) eines nachfolgenden Sammlerelements (1) eingesteckt werden kann,
wobei der erste Öffnungsabschnitt (2) und der zweite Öffnungsabschnitt (3) exzentrisch zueinander angeordnet sind, so dass, wenn ein erster Öffnungsabschnitt eines vorhergehenden Sammlerelements (1) in einen zweiten Öffnungsabschnitt eines nachfolgenden Sammlerelements (1) eingesetzt wird, zwischen einer Außenfläche des Hohlkörpers (1a) eines vorhergehenden Sammlerelements und einer Innenfläche des Hohlkörpers (1a) des nachfolgenden Sammlerelements (1) ein Zwischenraum mit einer exzentrischen ringförmigen oder sichelförmigen Querschnittsform ausgebildet wird, und
wobei ein gekrümmter Teilabschnitt am Hohlkörper (1a) dergestalt eingerichtet ist, dass an seiner Außenfläche ein konkaver Teilabschnitt angeordnet ist, wobei der gekrümmte Teilabschnitt an einem Übergangsbereich zwischen dem ersten Öffnungsabschnitt (2) und dem Zwischenabschnitt (4) angeordnet ist, so dass, wenn ein Sammlerelement (1) in ein nachfolgendes Sammlerelement (1) eingesetzt wird, der gekrümmte Teilabschnitt dem Durchgang (5a) des nachfolgenden Sammlerelements (1) gegenüberliegt, um für das Filtrat einen Strömungsweg mit kontinuierlicher Form vom Durchgang (5a) zum Inneren des Hohlkörpers (1a) bereitzustellen, und
c) Anbringen des Kopplungsabschnitts (5) der Sammlerelemente (1) an den Plattenelementen (6), so dass der Durchgang (5a) des Kopplungsabschnitts (5) mit dem Entwässerungsauslauf (6b) des Plattenelements (6b) verbunden ist, um so eine fluidische Verbindung zwischen der Filtratwanne (6a) und dem Inneren des Hohlkörpers (1a) des Sammlerelements (1) bereitzustellen.

13. Verfahren nach Anspruch 12, **dadurch gekennzeichnet, dass** das Verfahren ferner den Schritt umfasst:
d) Anordnen jedes der Sammlerelemente (1) dergestalt, dass, sowohl im geschlossenen Zustand als auch im geöffneten Zustand, die Innenräume der Hohlkörper (1a) der Sammlerelemente (1) in benachbarten Plattenelementen (6) einen wirksam durchgehenden Filtratkanal in Pressrichtung zwischen jedem benachbarten Plattenelement (6) ausbilden.

14. Verfahren nach Anspruch 12 oder 13, **dadurch gekennzeichnet, dass** das Verfahren ferner den Schritt umfasst:
e) Anordnen jedes der Sammlerelemente (1) dergestalt, dass sich im offenen Zustand ein erster Öffnungsabschnitt (2) eines vorhergehenden Sammlerelements (1) mindestens bis zur Ebene eines zweiten Öffnungsabschnitts (3) eines nachfolgenden Sammlerelements (1) erstreckt, wodurch ein ununterbrochener Filtratkanal in Pressrichtung zwischen jedem benachbarten Plattenelement (6) ausgebildet wird.

15. Verfahren nach einem der vorhergehenden Ansprüche 12 bis 14, **dadurch gekennzeichnet, dass** das Verfahren ferner den Schritt umfasst:
f) Anordnen jedes der Sammlerelemente (1) dergestalt, dass sich im offenen Zustand ein erster Öffnungsabschnitt (2) eines vorhergehenden Sammlerelements (1) innerhalb eines zweiten Öffnungsabschnitts (3) eines nachfolgenden Sammlerelements (1) erstreckt, wodurch ein zusammenhängender Filtratkanal in Pressrichtung zwischen jedem benachbarten Plattenelement (6) ausgebildet wird.

16. Verfahren nach einem der vorhergehenden Ansprüche 12 bis 15, **dadurch gekennzeichnet, dass** das Verfahren ferner den Schritt umfasst:
g) Bereitstellen eines dehnungsfähigen Dichtungsmittels (3b) vom Typ Faltenbalg, so dass mindestens ein vorhergehendes Sammlerelement (1) und ein nachfolgendes Sammlerelement (1) mit dem dehnungsfähigen Dichtungsmittel (3b) ausgestattet sind, das sich zwischen dem ersten Öffnungsabschnitt (2) des vorhergehenden Sammlerelements (1) und dem zweiten Öffnungsabschnitt (3) des nachfolgenden Sammlerelements (1) erstreckt.

17. Verfahren nach einem der vorhergehenden Ansprüche 12 bis 16, **dadurch gekennzeichnet, dass** das Verfahren ferner den Schritt umfasst:
h) Anordnen jedes der Sammlerelemente (1) von benachbarten Plattenelementen (6) dergestalt, dass mindestens im geschlossenen Zustand das vorhergehende Sammlerelement (1) einen Abstand zum Durchgang (5a) an der Innenseite des Hohlkörpers (1a) eines nachfolgenden Sammlerelements (1) aufweist, so dass das vorhergehende Sammlerelement (1) den Filtratstrom vom Durchgang (5a) zum Inneren des Hohlkörpers (1a) des nachfolgenden Sammlerelements (1) nicht blockiert.

18. Verfahren zum Betreiben eines horizontalen Druckfilters (8), **dadurch gekennzeichnet, dass** es den horizontalen Druckfilter (8) nach einem der vorhergehenden Ansprüche 1 bis 11 bereitstellt und ferner die Schritte umfasst:
- Ausbilden einer Filterkammer (6d) durch Stellen der Plattenelemente (6) in einen geschlossen Zustand;
- im geschlossenen Zustand, Bereitstellen einer Suspensionszufuhr zur Filterkammer (6d) und, zu einem vorherbestimmten Zeitpunkt, Unterbrechen der Suspensionszufuhr zur Filterkammer (6d);
- nach erfolgter Unterbrechung der Suspensionszufuhr, Stellen der Plattenelemente (6) in einen geöffneten Zustand; und
- im offenen Zustand, Entfernen des während des geschlossenen Zustands gebildeten Feststoffkuchens aus dem Raum zwischen den Plattenelementen (6).

## Revendications

1. Filtre sous pression horizontal (8) ayant plusieurs éléments de plateau (6) qui présente un état fermé et un état ouvert de telle façon que
- à l'état fermé, des éléments de plateau adjacents (6) soient essentiellement plaqués l'un contre l'autre pour séparer un filtrat d'une suspension, ce qui produit un gâteau solide entre les éléments de plateau adjacents (6), et
- à l'état ouvert, des éléments de plateau adjacents (6) soient rétractés à une distance entre eux autorisant l'évacuation du gâteau solide entre les éléments de plateau adjacents (6),
dans lequel au moins l'un des plusieurs éléments de plateau est un élément de plateau comprenant
- un bac à filtrat (6a), préférablement formé en tant que portion dudit élément de plateau, pour recevoir le filtrat, et
- au moins une sortie de drainage (6b) ayant un conduit de drainage (6c) pour fournir une communication fluidique entre le bac à filtrat (6a) et la sortie de drainage (6b), et
- un élément collecteur de filtrat (1) pour former un conduit vertical entre des plateaux adjacents (6), qui a un corps creux (1a) formant une première portion d'ouverture (2), une deuxième portion d'ouverture (3) et une portion intermédiaire (4), ladite portion intermédiaire (4) formant, à l'intérieur du corps creux (1a), un conduit (4a) en direction de pressage entre la première portion d'ouverture (2) et la deuxième portion d'ouverture (3), et
dans lequel l'élément collecteur (1) comprend également une portion de couplage (5) pour coupler l'élément collecteur (1) à un élément de plateau de filtre sous pression (6), ladite portion de couplage s'étendant à partir du corps (1a) de l'élément collecteur en sens transversal à la direction de pressage et ayant un passage (5a) pour fournir une communication fluidique entre l'intérieur du corps creux (1a) et une sortie de drainage (6b) d'un élément de plateau de filtre sous pression (6),
dans lequel la portion de couplage (5) de l'élément collecteur est couplé à la sortie de drainage (6b) de l'élément de plateau (6) de manière à fournir une communication fluidique entre le bac à filtrat (6a) et le corps creux (1a) de l'élément collecteur,
dans lequel la dimension extérieure de la première portion d'ouverture (2) est inférieure à la dimension intérieure de la deuxième portion d'ouverture (3) de telle façon que la première portion d'ouverture (2) d'un élément collecteur précédent (1) puisse être emboîtée au moins partiellement dans la deuxième portion d'ouverture (3) d'un élément collecteur suivant (1),
**caractérisé en ce que** la première portion d'ouverture (2) et la deuxième portion d'ouverture (3) sont disposées de manière excentrique l'une par rapport à l'autre de telle façon que, lorsqu'une première portion d'ouverture (2) d'un élément collecteur précédent (1) est insérée dans une deuxième portion d'ouverture (3) d'un élément collecteur suivant (1), un espace présentant une forme annulaire excentrique ou une section en forme de croissant soit formé entre une surface extérieure du corps creux (1a) d'un élément collecteur précédent (1) et une surface intérieure du corps creux (1a) de l'élément collecteur suivant (1), et
dans lequel une partie incurvée est disposée sur le corps creux (1a) de telle façon qu'une partie concave soit disposée sur la surface extérieure de celui-ci, ladite partie incurvée étant disposée sur une région de transition entre la première portion d'ouverture (2) et la portion intermédiaire (4) de telle façon que, lorsqu'un élément collecteur (1) est inséré dans un élément collecteur suivant (1), la partie incurvée soit opposée au passage (5a) de l'élément collecteur suivant (1) pour fournir un chemin d'écoulement de forme continue pour le filtrat à partir du passage (5a) jusqu'à l'intérieur du corps creux (1a).

2. Filtre sous pression horizontal selon la revendication 1, **caractérisé en ce que** la portion de couplage (5) est munie d'un moyen pour attacher l'élément collecteur de manière mécanique et rigide à un élément de plateau de filtre sous pression (6).

3. Filtre sous pression horizontal (1) selon la revendication 1 ou 2, **caractérisé en ce qu'**une échancrure (4b) est formée dans le corps creux (1a), ledit passage (5a) étant disposé pour fournir une communication fluidique entre l'échancrure (4b) et une sortie de drainage (6b) d'un élément de plateau de filtre sous pression (6).

4. Filtre sous pression horizontal (1) selon la revendication 3, **caractérisé en ce que** ladite échancrure (4b), ledit passage (5a) à l'échancrure (4b), ou les deux, soient ouverts vers la première portion d'ouverture (2).

5. Filtre sous pression horizontal (1) selon l'une des revendications précédentes 1 à 4, **caractérisé en ce que** la première portion d'ouverture (2), la deuxième portion d'ouverture (3), ou les deux, sont munies d'un moyen d'étanchéité (3a) pour étancher une connexion entre une première portion d'ouverture (2) d'un élément collecteur précédent (1) et une deuxième portion d'ouverture (3) d'un élément collecteur suivant (1).

6. Filtre sous pression horizontal (8) selon l'une des revendications précédentes 1 à 5, **caractérisé en ce que** des éléments collecteurs (1) de chaque élément de plateau (6) sont disposés de telle façon que, tant à l'état fermé qu'à l'état ouvert, des conduits (4a) des éléments collecteurs (1) dans des éléments de plateau adjacents forment un conduit de filtrat effectivement continu en direction de pressage entre chaque élément de plateau adjacent (6).

7. Filtre sous pression horizontal (8) selon l'une des revendications précédentes 1 à 6, **caractérisé en ce que**, à l'état ouvert, une première portion d'ouverture (2) d'un élément collecteur précédent (1) s'étend au moins jusqu'au niveau d'une deuxième portion d'ouverture (3) d'un élément collecteur suivant (1) en formant ainsi un conduit de filtrat ininterrompu en direction de pressage entre chaque élément de plateau adjacent (6).

8. Filtre sous pression horizontal (8) selon l'une des revendications précédentes 1 à 7, **caractérisé en ce que**, à l'état ouvert, une première portion d'ouverture (2) d'un élément collecteur précédent (1) s'étend à l'intérieur d'une deuxième portion d'ouverture (3) d'un élément collecteur suivant (1) en formant ainsi un conduit de filtrat contigu en direction de pressage entre chaque élément de plateau adjacent (6).

9. Filtre sous pression horizontal (1) selon l'une des revendications précédentes 1 à 9, **caractérisé en ce qu'**au moins un élément collecteur précédent (1) et un élément collecteur suivant (1) sont munis d'un moyen d'étanchéité extensible (3b) du type de soufflet s'étendant entre une première portion d'ouverture (2) de l'élément collecteur précédent (1) et une deuxième portion d'ouverture (3) d'un élément collecteur suivant (1).

10. Filtre sous pression horizontal selon la revendication 9, **caractérisé en ce que** lesdits moyens d'étanchéité extensibles (3b) sont imperméables au gaz.

11. Filtre sous pression horizontal (1) selon l'une des revendications précédentes 1 à 10, **caractérisé en ce que** des éléments collecteurs (1) d'éléments de plateau adjacents (6) sont disposés de telle façon que, au moins à l'état fermé, l'élément collecteur précédent (1) soit écarté du passage (5a) à l'intérieur du corps creux (1a) d'un élément collecteur suivant (1) de sorte qu'un élément collecteur précédent (1) n'obstrue pas le flux de filtrat depuis le passage (5a) vers l'intérieur du corps creux (1a) de l'élément collecteur suivant.

12. Procédé pour fournir un conduit de filtrat continu entre des éléments de plateau adjacents (6) d'un filtre sous pression horizontal (8), comprenant les étapes consistant à :
a) fournir un filtre sous pression horizontal (8) ayant plusieurs éléments de plateau (6), ledit filtre sous pression (8) présentant un état fermé et un état ouvert, de telle façon que
- à l'état fermé, des éléments de plateau adjacents (6) soient plaqués l'un contre l'autre, tandis que certains composants peuvent être situés entre les éléments de plateau adjacents (6), pour séparer un filtrat d'une suspension, ce qui produit un gâteau solide entre les éléments de plateau adjacents (6), et
- à l'état ouvert, des éléments de plateau adjacents (6) soient rétractés à une distance entre eux autorisant l'évacuation du gâteau solide entre les éléments de plateau adjacents (6),
**caractérisé par** les étapes consistant à
b) fournir, pour chaque élément de plateau, au moins un élément collecteur (1) pour former un conduit vertical entre des plateaux adjacents (6), qui a un corps creux (1a) formant une première portion d'ouverture (2), une deuxième portion d'ouverture (3) et une portion intermédiaire (4),
ladite portion intermédiaire (4) formant, à l'intérieur du corps creux (1a), un conduit (4a) en direction de pressage entre la première portion d'ouverture (2) et la deuxième portion d'ouverture (3),
ledit élément collecteur (1) comprenant également une portion de couplage (5) pour coupler l'élément collecteur (1) à un élément de plateau de filtre sous pression (6), ladite portion de couplage s'étendant à partir du corps (1a) de l'élément collecteur en sens transversal à la direction de pressage et ayant un passage (5a) pour fournir une communication fluidique entre l'intérieur du corps creux (1a) et une sortie de drainage (6b) d'un élément de plateau de filtre sous pression (6),
la dimension extérieure de la première portion d'ouverture (2) étant inférieure à la dimension intérieure de la deuxième portion d'ouverture (3) de telle façon que la première portion d'ouverture (2) d'un élément collecteur précédent (1) puisse être emboîtée au moins partiellement dans la deuxième portion d'ouverture (3) d'un élément collecteur suivant (1),
ladite première portion d'ouverture (2) et la deuxième portion d'ouverture (3) étant disposées de manière excentrique l'une par rapport à l'autre de telle façon que, lorsqu'une première portion d'ouverture d'un élément collecteur précédent (1) est insérée dans une deuxième portion d'ouverture d'un élément collecteur suivant (1), un espace présentant une forme annulaire excentrique ou une section en forme de croissant soit formé entre une surface extérieure du corps creux (1a) d'un élément collecteur précédent (1) et une surface intérieure du corps creux (1a) de l'élément collecteur suivant (1), et
une partie incurvée étant disposée sur ledit corps creux (1a) de telle façon qu'une partie concave soit disposée sur la surface extérieure de celui-ci, ladite partie incurvée étant disposée sur une région de transition entre la première portion d'ouverture (2) et la portion intermédiaire (4) de sorte que, lorsqu'un élément collecteur (1) est inséré dans un élément collecteur suivant (1), la partie incurvée soit opposée au passage (5a) de l'élément collecteur suivant (1) pour fournir un chemin d'écoulement de forme continue pour le filtrat depuis le passage (5a) vers l'intérieur du corps creux (1a), et
c) attacher la portion de couplage (5) des éléments collecteurs (1) aux éléments de plateau (6) de telle façon que le passage (5a) de la portion de couplage (5) soit couplé à la sortie de drainage (6b) de l'élément de plateau (6b) de manière à fournir une communication fluidique entre le bac à filtrat (6a) et l'intérieur du corps creux (1a) de l'élément collecteur (1).

13. Procédé selon la revendication 12, **caractérisé en ce que** le procédé comprend également l'étape consistant à :
d) disposer chacun des éléments collecteurs (1) de telle façon que, tant à l'état fermé qu'à l'état ouvert, les intérieurs des corps creux (1a) des éléments collecteurs (1) dans des éléments de plateau adjacents (6) forment un conduit de filtrat effectivement continu en direction de pressage entre chaque élément de plateau adjacent (6).

14. Procédé selon la revendication 12 ou 13, **caractérisé en ce que** le procédé comprend également l'étape consistant à :
e) disposer chacun des éléments collecteurs (1) de telle façon que, à l'état ouvert, une première portion d'ouverture (2) d'un élément collecteur précédent (1) s'étende au moins jusqu'au niveau d'une deuxième portion d'ouverture (3) d'un élément collecteur suivant (1) en formant ainsi un conduit de filtrat ininterrompu en direction de pressage entre chaque élément de plateau adjacent (6).

15. Procédé selon l'une des revendications précédentes 12 à 14, **caractérisé en ce que** le procédé comprend également l'étape consistant à :
f) disposer chacun des éléments collecteurs (1) de telle façon que, à l'état ouvert, une première portion d'ouverture (2) d'un élément collecteur précédent (1) s'étende à l'intérieur d'une deuxième portion d'ouverture (3) d'un élément collecteur suivant (1) en formant ainsi un conduit de filtrat contigu en direction de pressage entre chaque élément de plateau adjacent (6).

16. Procédé selon l'une des revendications précédentes 12 à 15, **caractérisé en ce que** le procédé comprend également l'étape consistant à :
g) fournir un moyen d'étanchéité extensible (3b) du type de soufflet de telle façon qu'au moins un élément collecteur précédent (1) et un élément collecteur suivant (1) soient munis du moyen d'étanchéité extensible (3b) s'étendant entre la première portion d'ouverture (2) de l'élément collecteur précédent (1) et la deuxième portion d'ouverture (3) de l'élément collecteur suivant (1).

17. Procédé selon l'une des revendications précédentes 12 à 16, **caractérisé en ce que** le procédé comprend également l'étape consistant à :
h) agencer chacun des éléments collecteurs (1) d'éléments de plateau adjacents (6) de telle façon qu'au moins à l'état fermé, l'élément collecteur précédent (1) soit situé à une distance du passage (5a) à l'intérieur du corps creux (1a) d'un élément collecteur suivant (1) de telle façon qu'un élément collecteur précédent (1) n'obstrue pas l'écoulement du filtrat depuis le passage (5a) vers l'intérieur du corps creux (1a) de l'élément collecteur suivant (1).

18. Procédé d'exploitation d'un filtre sous pression horizontal (8), **caractérisé en ce qu'**il fournit le filtre sous pression horizontal (8) selon l'une des revendications précédentes 1 à 11 et comprend également les étapes consistant à
- former une chambre de filtration (6d) en positionnant en état fermé les éléments de plateau (6);
- à l'état fermé, fournir une alimentation en suspension de la chambre de filtration (6d) et, à un instant prédéterminé, interrompre ladite alimentation en suspension de la chambre de filtration (6d) ;
- après interruption de ladite alimentation en suspension, positionner en état ouvert les éléments de plateau (6) ; et
- à l'état ouvert, évacuer le gâteau solide formé pendant l'état fermé entre les éléments de plateau (6).
